# EUROPEAN PATENT APPLICATION

(11) **EP 4 431 233 A1**
(43) Date of publication of application: **18.09.2024**
(21) Application number: 24163909.5
(22) Date of filing: 15.03.2024
(51) Int. Cl.: B24B 19/14, B24B 27/06, B24B 1/04, B24B 27/00

(54) **MULTI-HEAD DESIGN FOR ULTRASONIC IMPACT GRINDING OF CMCS**

(30) Priority: 17.03.2023 US 202318185867
(71) Applicant: RTX Corporation, Farmington, CT 06032 (US)
(72) Inventor: WANG, Zhigang, East Hartford, 06118 (US); KUCZEK, Andrzej E., East Hartford, 06118 (US); FERNANDEZ, Robin H., East Hartford, 06118 (US); RIEHL, John D., East Hartford, 06118 (US); BARRON, Alan C., East Hartford, 06118 (US); ABDI, Ahmed Abdillahi, East Hartford, 06118 (US); NELSON, Jason, East Hartford, 06118 (US); LAZUR, Andrew Joseph, East Hartford, 06118 (US)
(74) Representative: Dehns

(57) **Abstract**

An ultrasonic impact grinding assembly (10) includes a base (28) with a mount (30) for connecting a workpiece (W) to the base (28) and a first tool arm (16a). The ultrasonic impact grinding assembly also includes a second tool arm (16b). The first tool arm (16a) and the second tool arm (16b) each include a base end, a distal end, at least one joint between the base end and the distal end, and at least one actuator configured to move the at least one j oint. A first ultrasonic impact grinding tool head (42a) is connected to the distal end of the first tool arm (16a). A second ultrasonic impact grinding tool head (42b) is connected to the distal end of the second tool arm (16b).

## Description

### BACKGROUND

The present disclosure relates generally to machining ceramic matrix composites (CMCs) and, more particularly, to ultrasonic impact grinding (UIG).

Lightweight ceramic matrix composites (CMC) are highly desirable materials for gas turbine engine applications. CMCs, and particularly SiC/SiC CMCs (having silicon carbide matrix and fibers) exhibit excellent physical, chemical, and mechanical properties at high temperatures, making them particularly desirable for producing hot section components, including blade outer air seals (BOAS), vanes, blades, combustors, and exhaust structures. Like other materials, it can be critical to the performance, durability, and function of the CMC component to cool the CMC component to maintain appropriate operating temperatures. Features for mitigating thermal stresses can include cooling channels provided through the material. There have been challenges in developing an efficient and cost-effective way to machine CMCs with high quality. SiC/SiC CMCs have a hardness second only to that of diamond tooling and the SiC fiber reinforced phase results in anisotropy and heterogeneity.

UIG has been used to fabricate complex hole shapes with high aspect ratios on hard and brittle materials, such as CMCs. In UIG, electrical energy input to a transducer is converted to mechanical vibrations along a longitudinal axis at high frequency (usually at 20-40 kHz). The excited vibration is subsequently transmitted through an energy-focusing horn to amplify the vibration amplitude which is delivered to a tool tip. Thus, the tool, which locates directly above a workpiece, can vibrate along its longitudinal axis with a desired amplitude. A particulate slurry comprising a mixture of hard and/or abrasive material (e.g., diamond, boron carbide, etc.) suspended in water or oil is provided constantly into the machining area. The vibration of the tool causes particles held in the particulate slurry between the tool and the workpiece to impact the workpiece surface causing material removal by microchipping. Since actual machining is carried out by the particles, the tool can be softer than the workpiece.

The UIG process has matured to offer true three-dimensional machining capability to process a wide variety of engineering materials including ceramics and hard metals. An important application of UIG is for drilling through holes and blind holes and for machining of slots and pockets. Hole drilling always stands as the most popular machining process for product manufacturing, and UIG shows a high potentiality in fabricating diverse holes, especially those with small diameters and high aspect ratios on hard and brittle materials, such as CMCs. However, despite all favorable attributes of UIG, its application has been limited due to very low material removal rates.

### SUMMARY

A method for machining a workpiece includes orienting a first ultrasonic impact grinding tool head relative to the workpiece such that a tip of the first ultrasonic impact grinding tool head is spaced from a surface of the workpiece above a first work zone of the workpiece. A first nozzle supplies a first portion of a particulate slurry to the first work zone on the workpiece. A second ultrasonic impact grinding tool head is oriented relative to the workpiece such that a tip of the second ultrasonic impact grinding tool head is spaced from the surface of the workpiece above a second work zone of the workpiece. A second nozzle supplies a second portion of the particulate slurry to the second work zone on the workpiece. The tip of the first ultrasonic impact grinding tool head is vibrated and the tip of the second ultrasonic impact grinding tool head is vibrated.

An ultrasonic impact grinding assembly includes a base with a mount for connecting a workpiece to the base and a first tool arm. The ultrasonic impact grinding assembly also includes a second tool arm. The first tool arm and the second tool arm each include a base end, a distal end, at least one joint between the base end and the distal end, and at least one actuator configured to move the at least one joint. A first ultrasonic impact grinding tool head is connected to the distal end of the first tool arm. A second ultrasonic impact grinding tool head is connected to the distal end of the second tool arm.

A method for machining a workpiece comprising ceramic matrix composite, which the Applicant expressly reserves the right to claim independently, includes orienting a first ultrasonic impact grinding tool head relative to the workpiece such that a first tip of the first ultrasonic impact grinding tool head is positioned over a surface of the workpiece without contacting the surface of the workpiece. A first nozzle delivers a first supply of particulate slurry between the surface of the workpiece and the first tip. The first tip is vibrated along a longitudinal axis of the first tip to cause particles in the first supply of particulate slurry to vibrate and cut a first feature in the surface of the workpiece. A second ultrasonic impact grinding tool head is oriented relative to the workpiece such that a second tip of the second ultrasonic impact grinding tool head is positioned over the surface of the workpiece without contacting the surface of the workpiece. A second nozzle delivers a second supply of particulate slurry between the surface of the workpiece and the second tip. The second tip is vibrated along a longitudinal axis of the second tip to cause particles in the second supply of particulate slurry to vibrate and cut a second feature in the surface of the workpiece.

Features of embodiments are set forth in the dependent claims.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1 is a perspective view of an ultrasonic impact grinding assembly with a gantry supporting multiple ultrasonic impact grinding tool heads for machining workpieces made from ceramic matrix composite.
FIG. 2 is an enlarged view of a tool arm from the ultrasonic impact grinding assembly of FIG. 1.
FIG. 3 is an enlarged view of the multiple ultrasonic impact grinding tool heads of the ultrasonic impact grinding assembly of FIG. 1 grinding holes into the workpieces.
FIG. 4 is a cross-sectional view of an ultrasonic impact grinding tool.
FIG. 5 is a schematic diagram of a tool tip of the ultrasonic impact grinding tool from FIG. 4 vibrating particles in a particulate slurry on a surface of a workpiece.
FIG. 6 is a kinematic diagram representing a tool arm of the ultrasonic impact grinding assembly of FIGS. 1-3 along with a computer for driving the ultrasonic impact grinding assembly.
FIG. 7 is a perspective view of an ultrasonic impact grinding assembly with a drum supporting multiple ultrasonic impact grinding tool heads for machining workpieces made from ceramic matrix composite.
FIG. 8 is an enlarged perspective view of the ultrasonic impact grinding assembly of FIG. 7.

FIG. 9 is a perspective view of an ultrasonic impact grinding assembly with robotic arms supporting multiple ultrasonic impact grinding tool heads for machining workpieces made from ceramic matrix composite.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features, steps and/or components not specifically shown in the drawings.

### DETAILED DESCRIPTION

One way to improve productivity and yield of ultrasonic impact grinding (UIG) is to machine multiple features simultaneously with specially designed machine assemblies. The present disclosure is directed to UIG assemblies with multiple UIG tool heads that coordinate together to machine multiple features or holes into a workpiece at the same time.

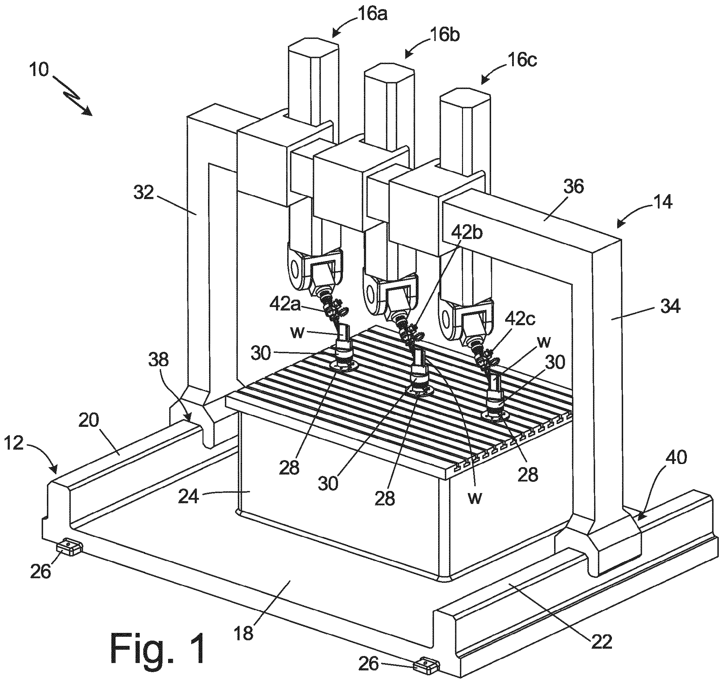

FIG. 1 discloses a perspective view of an ultrasonic impact grinding (UIG) assembly 10 for machining workpiece W. As shown in FIG. 1, UIG assembly 10 includes fixed frame 12, gantry 14, first tool arm 16a, second tool arm 16b, and third tool arm 16c. Fixed frame 12 includes bottom plate 18, first rail 20, second rail 22, pedestal 24, and anchoring flanges 26. Base 28 and mount 30 connect workpiece W to a top surface of pedestal 24. Gantry 14 includes first support beam 32, second support beam 34, and crossbeam 36. First gantry actuator 38 and second gantry actuator 40 connect gantry 14 to fixed frame 12. First tool arm 16a includes first UIG tool head 42a, second tool arm 16a includes second UIG tool head 42b, and third tool arm 16c includes third UIG tool head 42c.

Anchoring flanges 26 extend from bottom plate 18 and can be used to anchor fixed frame 12 to a floor. First rail 20 and second rail 22 are connected to bottom plate 18 and are spaced apart from one another. First rail 20 and second rail 22 extend parallel to each other and form a track for gantry 14. Pedestal 24 extends upward from bottom plate 18 and is positioned between first rail 20 and second rail 22. Base 28 is connected to the top surface of pedestal 24 and includes mount 30 for connecting and securing workpiece W to UIG assembly 10 for machining. In the example of FIG. 1, workpiece W is a turbine vane made from a ceramic matrix composite (CMC), such as a SiC/SiC CMC having silicon carbide fibers disposed in a silicon carbide matrix. The top surface of pedestal 24 can include grooves and base 28 can include a tongue or flange that can slide into the grooves of pedestal 24 to secure base 28 to pedestal 24. In the example of FIG. 1, multiple bases 28 and mounts 30 are connected to the top surface of pedestal 24 to connect multiple workpieces W to pedestal 24. In other examples, pedestal 24 can include an actuator, such as a servomotor, that connects base 28 to pedestal 24 and that can rotate mount 30 and workpiece W.

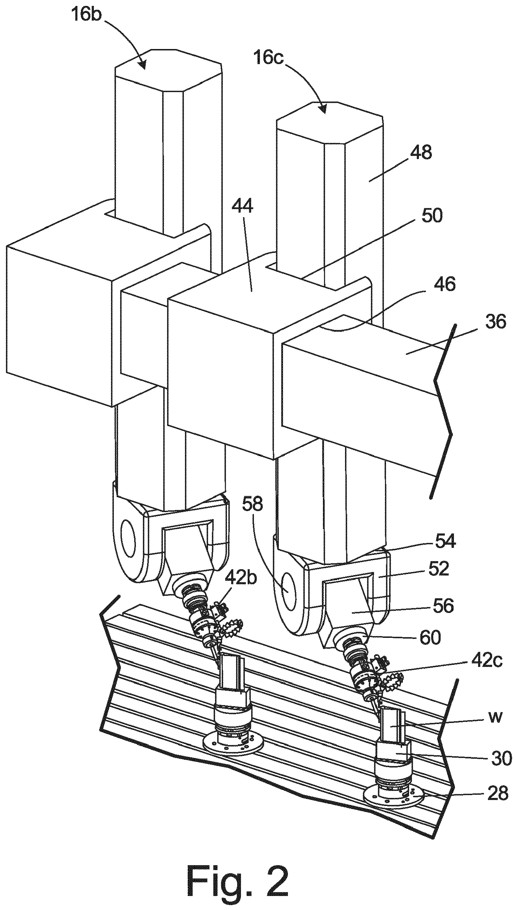

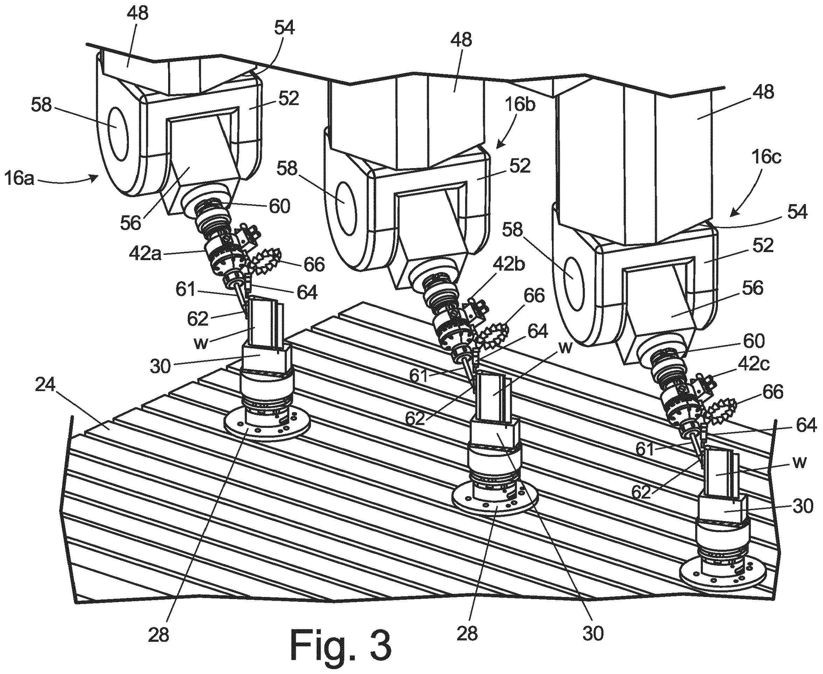

Gantry 14 is connected to first rail 20 and second rail 22 such that gantry 14 slidably moves on first rail 20 and second rail 22 of fixed frame 12. First support beam 32 extends upward from first rail 20, second support beam 34 extends upward from second rail 22, and crossbeam 36 extends from first support beam 32 to second support beam 34. First gantry actuator 38 connects a base end of first support beam 32 to first rail 20 and second gantry actuator 40 connects second support beam 34 to second rail 22. First gantry actuator 38 and second gantry actuator 40 work in unison to move gantry 14 along first rail 20 and second rail 22. First gantry actuator 38 and second gantry actuator 40 can each comprise a motor and mechanisms to drive gantry 14 on first rail 20 and second rail 22. In other examples, a single gantry actuator can move gantry 14 on first rail 20 and second rail 22. First tool arm 16a, second tool arm 16b, and third tool arm 16c are each connected to crossbeam 36 of gantry 14 and carry first UIG tool head 42a, second UIG tool head 42b, and third UIG tool head 42c respectively. As discussed below with reference to FIGS. 2 and 3, first tool arm 16a, second tool arm 16b, and third tool arm 16c can all move along crossbeam 36 to move first UIG tool head 42a, second UIG tool head 42b, and third UIG tool head 42c relative to workpieces W.

FIG. 2 is an enlarged view of third tool arm 16c from FIG. 1. As shown in FIG. 2, third tool arm 16c includes first link 44, first actuator assembly 46, second link 48, second actuator assembly 50, third link 52, third actuator assembly 54, fourth link 56, fourth actuator assembly 58, and fifth actuator assembly 60. While FIG. 2 focuses on third tool arm 16c, each of first tool arm 16a and second tool arm 16b is similar to third tool arm 16c and each of first tool arm 16a and second tool arm 16b also includes first link 44, first actuator assembly 46, second link 48, second actuator assembly 50, third link 52, third actuator assembly 54, fourth link 56, fourth actuator assembly 58, and fifth actuator assembly 60.

As shown in FIG. 2, first link 44 forms a base end of third tool arm 16c and contacts crossbeam 36. In the example of FIG. 2, first link 44 is tubular and extends around crossbeam 36. In other examples, first link 44 can only partially extend around crossbeam 36. First actuator assembly 46 connects first link 44 to crossbeam 36 of gantry 14 and moves first link 44 along crossbeam 36. First actuator assembly 46 can include a motor, gearing (such as a rack and pinion), bearings, rollers, belts, or any combination thereof. First actuator assembly 46 can include any mechanism that can move first link 44 in a linear motion along crossbeam 36.

Second link 48, as shown in FIG. 2, is an elongated member that is connected to first link 48 by second actuator assembly 50. Second actuator assembly 50 connects second link 48 to first link 44 such that second link 48 extends lengthwise in a vertical direction relative to ground. Second actuator assembly 50 is configured to move second link 48 vertically up and down, thereby raising and lowering third UIG tool head 42c relative to workpiece W and pedestal 24. Second actuator assembly 50 can include a motor, gearing (such as a rack and pinion), bearings, rollers, belts, or any combination thereof. Second actuator assembly 50 can include any mechanism that can raise and lower second link 48.

Third link 52 is connected to an end of second link 48 by third actuator assembly 54, which forms a joint between second link 48 and third link 52. Third actuator assembly 54 can include a servo motor, gearing, bearings, or a combination thereof to rotate third link 52 about a shared center axis of second link 48 and third link 52. Third link 52 can be shaped as a clevis to receive fourth link 56 and house fourth actuator assembly 58. Fourth actuator assembly 58 is at a joint between fourth link 56 and third link 52. Fourth actuator assembly 58 connects fourth link 56 to third link 52 and causes fourth link 56 to rotate about an axis of the clevis of third link 52. Fourth link 56 forms a distal end of third tool arm 16c. Fifth actuator assembly 60 connects third UIG tool head 42c to fourth link 56. Fifth actuator assembly 60 can be a linear actuator that moves third UIG tool head 42c along a central axis of third UIG tool head 42c. Fifth actuator assembly 60 can make small adjustments to move third UIG tool head 42c toward and away from workpiece W without having to move the rest of third tool arm 16c. As discussed below with reference to FIGS. 3-5, third UIG tool head 42c, as well as first UIG tool head 42a and second UIG tool head 42b, includes a nozzle for supplying particulate slurry to a surface of workpiece W and a tool tip that directs vibrational energy into the particulate slurry without the tool tip contacting the surface of workpiece W.

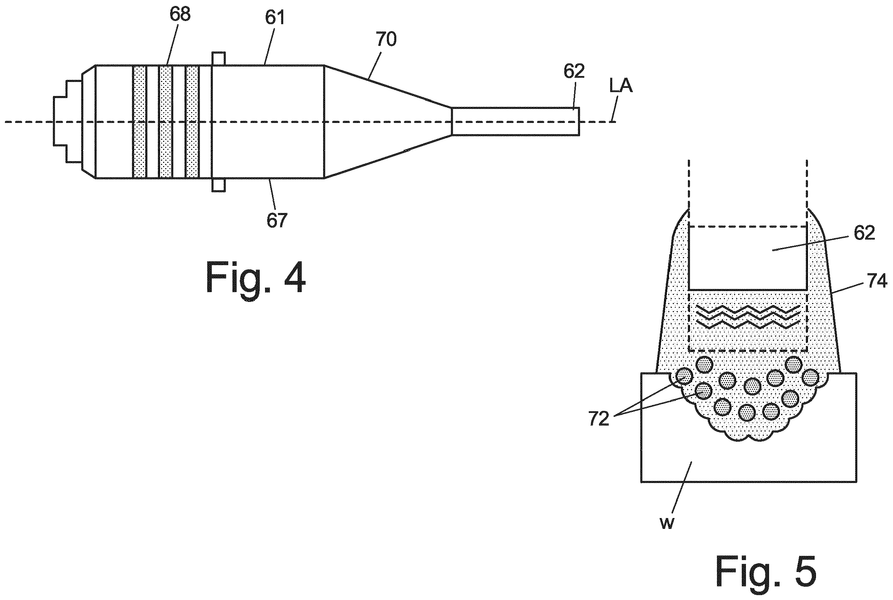

FIGS. 3-5 will be discussed concurrently. FIG. 3 is an enlarged view of first UIG tool head 42a, second UIG tool head 42b, third UIG tool head 42c, and workpieces W from FIG. 1. As shown in FIG. 3, each of first UIG tool head 42a, second UIG tool head 42b, and third UIG tool head 42c includes UIG tool 61 with tool tip 62. Each of first UIG tool head 42a, second UIG tool head 42b, and third UIG tool head 42c also includes nozzle 64 and supply tube 66. FIG. 4 is a cross-sectional view of UIG tool 61. In addition to tool tip 62, UIG tool 61 also includes tool body 67, transducer 68, horn 70, and longitudinal axis LA. FIG. 5 is a schematic diagram of tool tip 62 from FIG. 4 vibrating particles 72 in a particulate slurry 74 on a surface of workpiece W to form feature 76.

As shown in FIG. 3, each of first UIG tool head 42a, second UIG tool head 42b, and third UIG tool head 42c is adapted to receive and retain one of UIG tool 61. As shown in FIG. 4, tool body 67 of UIG tool 61 is a sonotrode configured to vibrate along longitudinal axis LA at a desired amplitude and at a frequency usually around 20-40 kHz. Transducer 68 is formed in a back mass of tool body 67, and horn 70 is formed in tool body 67 between transducer 68 and tool tip 62. Horn 70 has a converging portion that is configured to amplify a vibration amplitude delivered to tool tip 62.

UIG assembly 10, through UIG tool head 42, inputs electrical energy to transducer 68 which is converted to mechanical vibrations along longitudinal axis LA at high frequency (usually 20-40 kHz). When energized, transducer 68 transmits vibrational energy to tool tip 62 via horn 70. While UIG assembly 10 is in use and while tool tip 62 is positioned over a surface of workpiece W and is powered and vibrating, supply tube 66 and nozzle 64 supply particulate slurry 74 with particles 72 into a gap between workpiece W and tool tip 62. Supply tube 66 can be connected to a pump (not shown) that supplies the particulate slurry from a supply reservoir (not shown). Particulate slurry 74 includes particles 72 suspended in a liquid (generally oil or water). Particles 72 can comprise a hard and/or abrasive material, such as diamond or boron carbide. Vibration of tool tip 62 transmits energy into particulate slurry 74 to propel particles 72 at high velocity between tool tip 62 and workpiece W such that particles 72 impact and chip the surface of workpiece W to form feature 76. Feature 76 can be a through hole, a slot, a groove, or any other recessed feature in the surface of workpiece W. In addition to providing particles 72 for chipping feature 76 into the surface of workpiece W, particulate slurry 74 also flushes away debris from feature 76 and a working zone of tool tip 62.

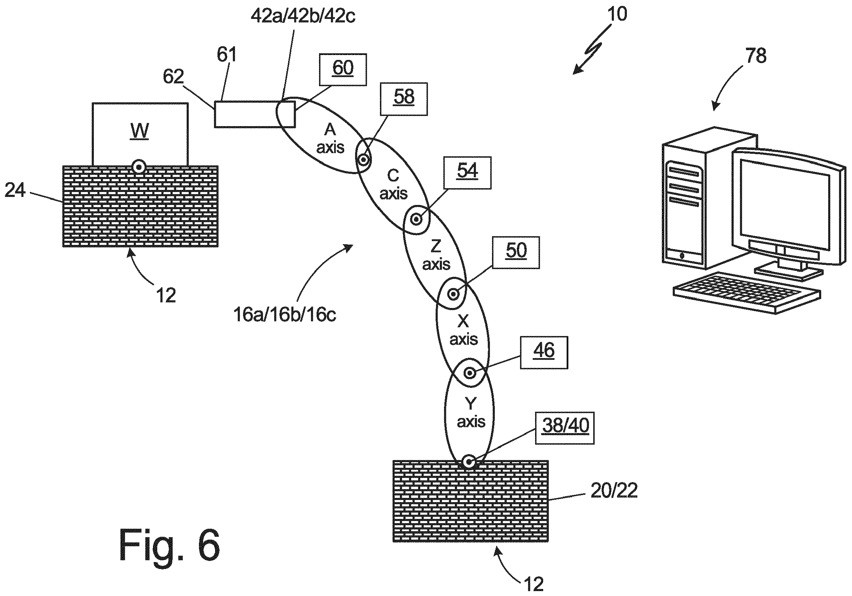

Workpiece W can be formed of a CMC material. Workpiece W can be, for example, a SiC/SiC CMC having silicon carbide fibers disposed in a silicon carbide matrix. Because UIG assembly 10 incorporates multiple UIG tool heads 42, UIG assembly 10 is able to work on multiple workpieces W at time, as shown in FIGS. 1-3. In addition to working on multiple workpieces W at a time, UIG assembly 10 can also produce multiple features 76 in a single workpiece at a time, greatly reducing the amount of time needed to produce features 76 in workpiece W. While the disclosed UIG assembly 10 is particularly suited for improving the efficiency and throughput of CMC manufacturing, it is not limited to use on CMC workpiece or particular CMC materials. Workpiece 34 can be a component of a gas turbine engine. For example, workpiece W can be a BOAS, vane, blade, combustor, exhaust structure configured for use at high temperatures. As disclosed below in FIG. 6, UIG assembly 10 can include a central processing unit (CPU) of a computer to coordinate movement of the multiple UIG tool heads 42a, 42b, and 42c during operation of UIG assembly 10.

FIG. 6 is a kinematic diagram representing one of first tool arm 16a, second tool arm 16b, and third tool arm 16c of UIG assembly 10 from FIGS. 1-3 along with computer 78 for driving UIG assembly 10. With the addition of any axis over a conventional three axis configuration, there are various moving components, especially with more than one tool group, and motion that is dependent on machine modes. Multi-axis machine programming becomes much more complicated. Therefore, programming using complex multi-task machines for UIG is necessary. As shown in FIGS. 1-3 and the kinematic diagram of FIG. 6, each of first tool arm 16a, second tool arm 16b, and third tool arm 16c of UIG assembly 10 includes five axes of motion for moving UIG tool head 42 and tool tip 62: Y axis, X axis, Z axis, C axis, and A axis. First gantry actuator 38 and second gantry actuator 40 move UIG tool head 42 along the Y axis parallel to first rail 20 and second rail 22 of fixed frame 12. First actuator assembly 46 of tool arm 16 moves UIG tool head 42 along the X axis parallel to crossbeam 36 of gantry 14. Second actuator assembly 50 of tool arm 16 moves UIG tool head 42 along the Z axis parallel to second link 48. Third actuator assembly 54 rotates UIG tool head 42 about the C axis which runs along a center of second link 48. Fourth actuator assembly 58 rotates UIG tool head 42 about the A axis. The A axis is the axis of the clevis of third link 52 about which fourth link 56 rotates. Fifth actuator assembly 60 moves UIG tool head 42 along the longitudinal axis LA of UIG tool 61, shown in FIG. 4. Through the kinematic chain shown in FIG. 6, the relative positions between tool tip 62 to workpiece W can be decided, and then post processed to machine code so that a CPU of computer 78 can drive and coordinate first tool arm 16a, second tool arm 16b, and third tool arm 16c of UIG assembly 10 for efficient production of workpiece W.

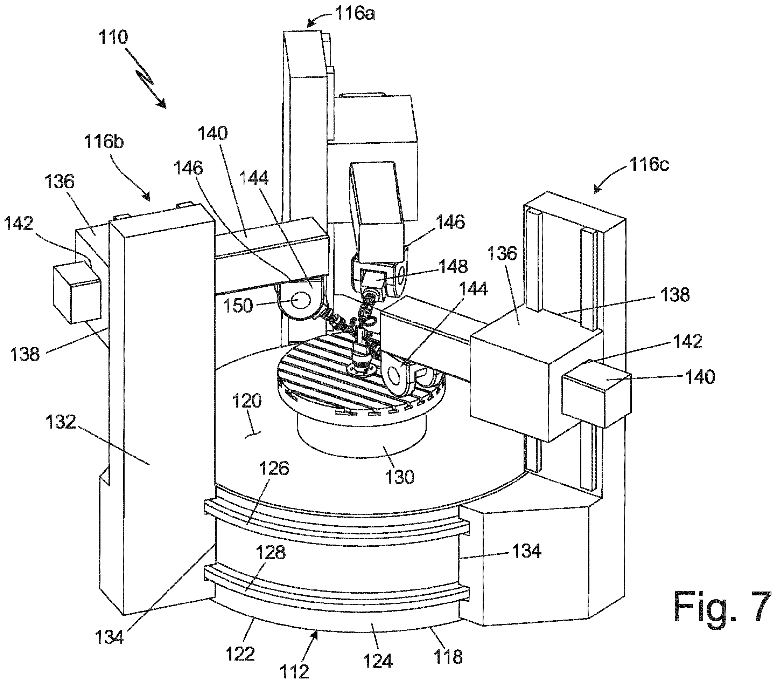

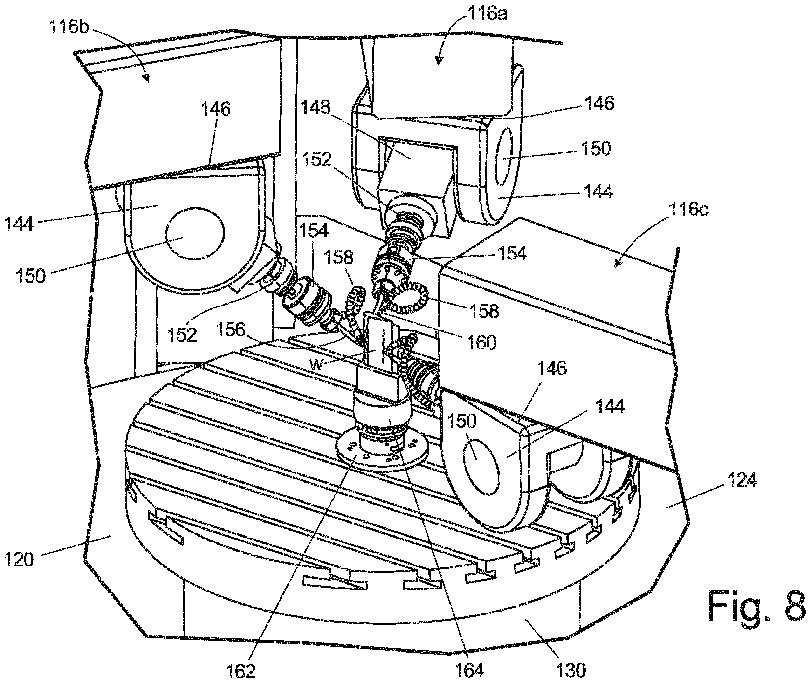

FIGS. 7 and 8 will be discussed concurrently. FIG. 7 is a perspective view of UIG assembly 110 machining features in three different work zones of workpiece W. Workpiece W in FIGS. 7 and 8 is a turbine airfoil made from a CMC material. FIG. 8 shows an enlarged perspective view of UIG assembly 110 machining workpiece W. As shown best in FIG. 7, UIG assembly 110 includes fixed frame 112, first tool arm 116a, second tool arm 116b, and third tool arm 116c. Fixed frame 112 includes cylindrical drum 118 with top end 120, bottom end 122, side surface 124, first rail 126, second rail 128, and pedestal 130. As shown collectively between FIGS. 7 and 8, each of first tool arm 116a, second tool arm 116b, and third tool arm 116c includes first link 132, first actuator assembly 134, second link 136, second actuator assembly 138, third link 140, third actuator assembly 142, fourth link 144, fourth actuator assembly 146, fifth link 148, fifth actuator assembly 150, sixth actuator assembly 152, UIG tool head 154, and UIG tool 156. Base 162 and mount 164 connect workpiece W to a top surface of pedestal 130.

Side surface 124 of cylindrical drum 118 extends axially between top end 120 and bottom end 122 and extends circumferentially around cylindrical drum 118. First rail 126 and second rail 128 are connected to side surface 124 and are spaced apart from one another axially and extend circumferentially around cylindrical drum 118. First rail 126 and second rail 128 extend parallel to each other and form a track for first tool arm 116a, second tool arm 116b, and third tool arm 116c. Pedestal 130 extends upward from top end 120 of cylindrical drum 118. Base 162 is connected to a top surface of pedestal 130 and includes mount 164 for connecting and securing workpiece W to UIG assembly 110 for machining. In the example of FIGS. 7 and 8, workpiece W is a turbine vane made from a ceramic matrix composite (CMC), such as a SiC/SiC CMC having silicon carbide fibers disposed in a silicon carbide matrix. The top surface of pedestal 130 can include grooves and base 162 can include a tongue or flange that can slide into the grooves of pedestal 130 to secure base 162 to pedestal 130. In other examples, pedestal 130 can include an actuator, such as a servomotor, that connects base 162 to pedestal 24 and that can rotate mount 164 and workpiece W.

First tool arm 116a, second tool arm 116b, and third tool arm 116c are each connected to first rail 126 and second rail 128 and are configured to move on first rail 126 and second rail 128. In the example of FIGS. 7 and 8, first tool arm 116a, second tool arm 116b, and third tool arm 116c each have the same design and configuration. First tool arm 116a will be described in detail, and the description of first tool arm 116a also applies to second tool arm 116b and third tool arm 116c. First link 132 forms a base end of first tool arm 116a, and first actuator assembly 134 connects first link 132 to first rail 126 and second rail 128. First actuator assembly 134 moves first tool arm 116a on first rail 126 and second rail 128 to circumferentially adjust a position of first tool arm 116a about cylindrical drum 118. First actuator assembly 134 can comprise a motor and mechanisms to drive first tool arm 116a on first rail 126 and second rail 128. First actuator assembly 134 allows first tool arm 116a to rotate UIG tool head 154 and UIG tool 156 (both shown best in FIG. 8) around workpiece W.

First link 132 of first tool arm 116a extends upward from cylindrical drum 118. Second link 136 is connected to first link 132 by second actuator assembly 138. Second actuator assembly 138 moves second link 136 up and down along a length of first link 132. Second actuator assembly 138 can include a motor, gearing (such as a rack and pinion), track, bearings, rollers, belts, or any combination thereof. Second actuator assembly 138 can include any mechanism that can move second link 136 in a linear motion along first link 132. Second actuator assembly 138 allows first tool arm 116a to move UIG tool head 154 and UIG tool 156 (both shown best in FIG. 8) vertically up and down relative to ground and relative to workpiece W.

In the example of FIGS. 7 and 8, second link 136 is tubular to receive third link 140. In other examples, second link 136 can "C" shaped or "L" shaped and partially extend around third link 140. As shown in FIGS. 7 and 8, third link 140 is an elongated member that extends horizontally through second link 136 relative to ground and is connected to second link 136 by third actuator assembly 142. Third actuator assembly 142 can include a motor, gearing (such as a rack and pinion), bearings, rollers, belts, or any combination thereof. Third actuator assembly 142 can include any mechanism that can move third link 140 in a linear motion through second link 136. Third actuator assembly 142 allows first tool arm 116a to move UIG tool head 154 and UIG tool 156 (both shown best in FIG. 8) horizontally toward workpiece W and horizontally away from workpiece W.

Fourth link 144 is connected at or near a distal end of third link 140 by fourth actuator assembly 146. Fourth actuator assembly 146 forms a rotational joint between fourth link 144 and third link 140 such that fourth link 144 can rotate around a central axis of fourth link 144. Fourth actuator assembly 146 can include a servo motor, gearing, bearings, or a combination thereof to rotate fourth link 144 about the center axis of fourth link 144. Fourth link 144 is shaped as a clevis to receive fifth link 148 and house fifth actuator assembly 150. Fifth actuator assembly 150 is at a joint between fourth link 144 and fifth link 148. Fifth actuator assembly 150 connects fifth link 148 to the clevis of fourth link 144 and causes fifth link 148 to rotate about an axis of the clevis of fourth link 144. Fifth actuator assembly 150 allows first tool arm 116a to adjust an angle of UIG tool head 154 and UIG tool 156 (both shown best in FIG. 8) relative to workpiece W.

As shown best in FIG. 8, fifth link 148 forms a distal end of first tool arm 116a. Sixth actuator assembly 154 connects UIG tool head 154 to fifth link 148. Sixth actuator assembly 154 can be a linear actuator that moves UIG tool head 154 and UIG tool 156 along a central axis of UIG tool head 154. Sixth actuator assembly 154 can make small adjustments to move UIG tool head 154 and UIG tool 156 toward and away from workpiece W without having to move the rest of first tool arm 116a. First tool arm 116a also includes supply tube 158 and nozzle 160 for supplying particulate slurry to a surface of workpiece W. Each of UIG tool heads 154 and UIG tools 156 of UIG assembly 110 function in similar fashion to UIG tool heads 42 and UIG tools 61 previously described with reference to FIGS. 1-5. Supply tube 158 and nozzle 160 function in similar fashion to supply tube 66 and nozzle 64 previously described with reference to FIG. 3.

As discussed with reference to FIG. 6, UIG assembly 110 can include a computer with a central processing unit to coordinate the actions of first tool arm 116a, second tool arm 116b, and third tool arm 116c. UIG assembly 110 can use first tool arm 116a, second tool arm 116b, and third tool arm 116c to machine multiple features into workpiece W at the same time. These features can include slots, through holes, grooves, and any other feature that can be produced by UIG tools 156. During the process of machining multiple features into workpiece W, UIG assembly 110 orientates UIG tool head 154 of first tool arm 116a relative to workpiece W such that a tip of UIG tool 156 of first tool arm 116a is positioned in a first work zone over a surface of workpiece W without contacting the surface of workpiece W. In the example of FIG. 8, the first work zone where first tool arm 116a is forming a feature is a pressure surface of workpiece W. A first supply or portion of particulate slurry is delivered between the surface of workpiece W and the tip of UIG tool 156 of first tool arm 116a. The tip of UIG tool 156 of first tool arm 116a is vibrated along a longitudinal axis of UIG tool 156 to cause particles in the first supply or portion of particulate slurry to vibrate and cut a first feature on workpiece W.

UIG assembly 110 also orientates UIG tool head 154 of second tool arm 116b relative to workpiece W such that a tip of UIG tool 156 of second tool arm 116b is positioned in a second work zone over the surface of workpiece W without contacting the surface of workpiece W. The second work zone where second tool arm 116b is forming a feature is a leading edge of workpiece W. A second supply or portion of particulate slurry is delivered between the surface of workpiece W and the tip of UIG tool 156 of second tool arm 116b. The tip of UIG tool 156 of second tool arm 116b is vibrated along a longitudinal axis of UIG tool 156 to cause particles in the second supply or portion of particulate slurry to vibrate and cut a second feature on workpiece W. UIG assembly 110 also orientates UIG tool head 154 of third tool arm 116c relative to workpiece W such that a tip of UIG tool 156 of third tool arm 116c is positioned in a third work zone over the surface of workpiece W without contacting the surface of workpiece W. The third zone where third tool arm 116c is forming a feature is suction side of workpiece W. A third supply or portion of particulate slurry is delivered between the surface of workpiece W and the tip of UIG tool 156 of third tool arm 116c. The tip of UIG tool 156 of third tool arm 116c is vibrated along a longitudinal axis of UIG tool 156 to cause particles in the third supply or portion of particulate slurry to vibrate and cut a third feature on workpiece W. Since UIG assembly 110 can simultaneously machine multiple features into workpiece W, UIG assembly 110 can machine workpiece W faster than a traditional UIG machine.

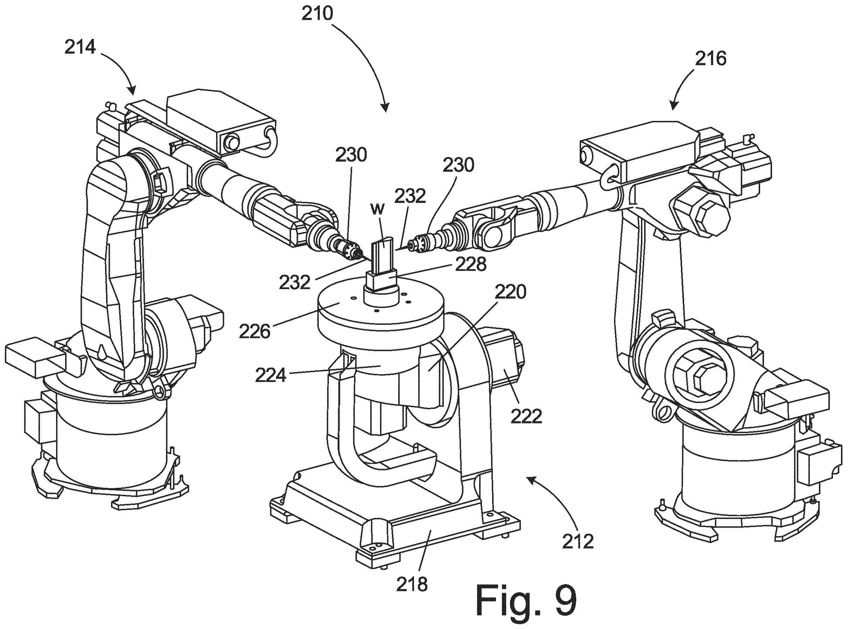

FIG. 9 is a perspective view of UIG assembly 210 with pedestal 212, first robotic arm 214, and second robotic arm 216. Pedestal 212 includes fixed frame 218, rotor 220, rotor actuator 222, base actuator 224, base 226, and mount 228. First robotic arm 214 and second robotic arm 216 each include UIG tool head 230 and UIG tool 232. As shown in FIG. 9, fixed frame 218 of pedestal 212 forms a stand that supports pedestal 212. Rotor 220 is connected to fixed frame 218 by rotor actuator 222. Rotor actuator 222 can rotate rotor 220 about an axis that is parallel to ground. Rotor actuator 222 can comprise a servomotor. Base actuator 224 connects base 226 to rotor 220 and can rotate base 226 along an axis that is perpendicular to the axis of rotation of rotor 220. Mount 228 is connected to base 226 and connects workpiece W to pedestal 212. First robotic arm 214 and second robotic arm 216 each include at least five servo-actuated joints that proved at least five axis of motion to first robotic arm 214 and second robotic arm 216. Similar to UIG assembly 10 and UIG assembly 110, UIG assembly 210 can machine multiple features into workpiece W at the same time, which decreases the amount of time needed to ultrasound impact grinding features into workpiece W.

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, rotational or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

### Discussion of Possible Embodiments

The following are non-exclusive descriptions of possible embodiments of the present invention.

A method for machining a workpiece includes orienting a first ultrasonic impact grinding tool head relative to the workpiece such that a tip of the first ultrasonic impact grinding tool head is spaced from a surface of the workpiece above a first work zone of the workpiece. A first nozzle supplies a first portion of a particulate slurry to the first work zone on the workpiece. A second ultrasonic impact grinding tool head is oriented relative to the workpiece such that a tip of the second ultrasonic impact grinding tool head is spaced from the surface of the workpiece above a second work zone of the workpiece. A second nozzle supplies a second portion of the particulate slurry to the second work zone on the workpiece. The tip of the first ultrasonic impact grinding tool head is vibrated and the tip of the second ultrasonic impact grinding tool head is vibrated.

The method of the preceding paragraph can optionally include, additionally and/or alternatively, any one or more of the following features, configurations and/or additional components:
vibrating the tip of the first ultrasonic impact grinding tool head to form a first hole in the first work zone of the workpiece; and vibrating the tip of the second ultrasonic impact grinding tool head to form a second hole in the second work zone of the workpiece;
supporting, by a gantry, the first ultrasonic impact grinding tool head; and supporting, by the gantry, the second ultrasonic impact grinding tool head;
supporting, by a cylindrical drum, a first tool arm comprising the first ultrasonic impact grinding tool head; and supporting, by the cylindrical drum, a second tool arm comprising the second ultrasonic impact grinding tool head;
supporting, by a first robotic arm, the first ultrasonic impact grinding tool head; and supporting, by a second robotic arm, the second ultrasonic impact grinding tool head;
coordinating, by a central processing unit, a position of the first ultrasonic impact grinding tool head and a position of the second ultrasonic impact grinding tool head;
supporting the workpiece on a mount connected to a base;
rotating the base and/or mount to rotate the workpiece about a center axis;
the workpiece comprises a ceramic matrix composite material; and/or
the ceramic matrix composite material comprises silicon carbide fibers in a silicon carbide matrix.

An ultrasonic impact grinding assembly includes a base with a mount for connecting a workpiece to the base and a first tool arm. The ultrasonic impact grinding assembly also includes a second tool arm. The first tool arm and the second tool arm each include a base end, a distal end, at least one joint between the base end and the distal end, and at least one actuator configured to move the at least one joint. A first ultrasonic impact grinding tool head is connected to the distal end of the first tool arm. A second ultrasonic impact grinding tool head is connected to the distal end of the second tool arm.

The assembly of the preceding paragraph can optionally include, additionally and/or alternatively, any one or more of the following features, configurations and/or additional components:
a central processing unit in electrical communication with the actuator of the first tool arm, with the actuator of the second tool arm, with the first ultrasonic impact grinding tool head; and with the second ultrasonic impact grinding tool head;
a cylindrical drum comprising a top end, a bottom end, and a side surface extending between the top end and the bottom end; a first actuator assembly connecting the base end of the first tool arm to the side surface of the cylindrical drum; a second actuator assembly connecting the base end of the second tool arm to the side surface of the cylindrical drum, wherein the base end of the second tool arm is circumferentially spaced from the base end of the first tool arm on the cylindrical drum, and a third actuator assembly rotationally connecting the base to the top end of the cylindrical drum, and wherein the central processing unit is in electrical communication with the first actuator assembly, the second actuator assembly, and the third actuator assembly;
a gantry comprising a crossbeam extending from a first support beam to a second support beam; a first actuator assembly connecting the base end of the first tool arm to the crossbeam of the gantry; and a second actuator assembly connecting the base end of the second tool arm to the crossbeam of the gantry; and wherein the central processing unit is in electrical communication with the first actuator assembly and the third actuator assembly;
a fixed frame comprising: a first rail; a second rail spaced from the first rail, wherein the first support beam of the gantry is slidably connected to the first rail, and wherein the second support beam of the gantry is slidably connected to the second rail; and a pedestal between the first rail and the second rail;
a third actuator assembly rotationally connecting the base to the pedestal, and wherein the central processing unit is in electrical communication with the third actuator assembly;
a first supply tube on the first tool arm for delivery of a particulate slurry; a first nozzle proximate to the first ultrasonic impact grinding tool head and connected to the first supply tube; a second supply tube on the second tool arm; and a second nozzle proximate to the second ultrasonic impact grinding tool head and connected to the second supply tube; and/or
the ultrasonic impact grinding assembly comprises more than two ultrasonic impact grinding tool heads.

A method for machining a workpiece comprising ceramic matrix composite includes orienting a first ultrasonic impact grinding tool head relative to the workpiece such that a first tip of the first ultrasonic impact grinding tool head is positioned over a surface of the workpiece without contacting the surface of the workpiece. A first nozzle delivers a first supply of particulate slurry between the surface of the workpiece and the first tip. The first tip is vibrated along a longitudinal axis of the first tip to cause particles in the first supply of particulate slurry to vibrate and cut a first feature in the surface of the workpiece. A second ultrasonic impact grinding tool head is oriented relative to the workpiece such that a second tip of the second ultrasonic impact grinding tool head is positioned over the surface of the workpiece without contacting the surface of the workpiece. A second nozzle delivers a second supply of particulate slurry between the surface of the workpiece and the second tip. The second tip is vibrated along a longitudinal axis of the second tip to cause particles in the second supply of particulate slurry to vibrate and cut a second feature in the surface of the workpiece.

The method of the preceding paragraph can optionally include, additionally and/or alternatively, any one or more of the following features, configurations and/or additional components:
coordinating, by a central processing unit, a position of the first ultrasonic impact grinding tool head relative to the workpiece and a position of the second ultrasonic grinding tool head relative to the workpiece; and/or
supporting the workpiece on a mount; and rotating the mount to rotate the workpiece.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method for machining a workpiece (W), the method comprising:
orienting a first ultrasonic impact grinding tool head (42a; 154; 230) relative to the workpiece (W) such that a tip (62) of the first ultrasonic impact grinding tool head (42a; 154; 230) is spaced from a surface of the workpiece (W) above a first work zone of the workpiece (W);
supplying, by a first nozzle (64), a first portion of a particulate slurry (74) to the first work zone on the workpiece (W);
orienting a second ultrasonic impact grinding tool head (42b; 154; 230) relative to the workpiece (W) such that a tip (62) of the second ultrasonic impact grinding tool head (42b; 154; 230) is spaced from the surface of the workpiece (W) above a second work zone of the workpiece (W);
supplying, by a second nozzle (64), a second portion of the particulate slurry (74) to the second work zone on the workpiece (W);
vibrating the tip (62) of the first ultrasonic impact grinding tool head (42a; 154; 230); and
vibrating the tip (62) of the second ultrasonic impact grinding tool head (42b; 154; 230).

2. The method of claim 1, further comprising:
vibrating the tip (62) of the first ultrasonic impact grinding tool head (42a; 154; 230) to form a first hole (76) in the first work zone of the workpiece (W); and
vibrating the tip (62) of the second ultrasonic impact grinding tool head (42a; 154; 230) to form a second hole (76) in the second work zone of the workpiece (W).

3. The method of claim 1 or 2, further comprising:
supporting, by a gantry (14), the first ultrasonic impact grinding tool head (42a); and
supporting, by the gantry (14), the second ultrasonic impact grinding tool head (42b).

4. The method of claim 1 or 2, further comprising:
supporting, by a cylindrical drum (118), a first tool arm (116a) comprising the first ultrasonic impact grinding tool head (154); and
supporting, by the cylindrical drum (118), a second tool arm (116b) comprising the second ultrasonic impact grinding tool head (154).

5. The method of claim 1 or 2, further comprising:
supporting, by a first robotic arm (214), the first ultrasonic impact grinding tool head (230); and
supporting, by a second robotic arm (216), the second ultrasonic impact grinding tool head (230).

6. The method of any preceding claim, further comprising:
coordinating, by a central processing unit, a position of the first ultrasonic impact grinding tool head (42a; 154; 230) and a position of the second ultrasonic impact grinding tool head (42b; 2154; 230).

7. The method of any preceding claim, further comprising:
supporting the workpiece (W) on a mount (30; 164; 228) connected to a base (28; 162; 226); and optionally
rotating the base (28; 162; 226) and/or mount (30; 164; 228) to rotate the workpiece (W) about a center axis.

8. The method of any preceding claim, wherein the workpiece (W) comprises a ceramic matrix composite material, optionally wherein the ceramic matrix composite material comprises silicon carbide fibers in a silicon carbide matrix.

9. An ultrasonic impact grinding assembly (10; 110; 210) comprises:
a base (28; 162; 226) comprising a mount (30; 164; 228) for connecting a workpiece (W) to the base;
a first tool arm (16a; 116a; 214);
a second tool arm (16b; 116b; 216), wherein the first tool arm (16a; 116a; 214) and the second tool arm (16b; 116b; 216) each comprise:
a base end (44; 132);
a distal end (56; 148);
at least one joint (54, 58; 146, 150) between the base end (44; 132) and the distal end (56; 148); and
at least one actuator configured to move the at least one joint (54, 58; 146, 150);
a first ultrasonic impact grinding tool head (42a; 154; 230) connected to the distal end (56; 148) of the first tool arm (16a; 116a; 214); and
a second ultrasonic impact grinding tool head (42b; 154; 230) connected to the distal end (56; 148) of the second tool arm (16b; 116b; 216).

10. The ultrasonic impact grinding assembly of claim 9, further comprising:
a central processing unit in electrical communication with the actuator of the first tool arm (16a; 116a; 214), with the actuator of the second tool arm (16b; 116b; 216), with the first ultrasonic impact grinding tool head (42a; 154; 230); and with the second ultrasonic impact grinding tool head (42b; 154; 230).

11. The ultrasonic impact grinding assembly (110) of claim 10, further comprising:
a cylindrical drum (118) comprising a top end (120), a bottom end (122), and a side surface (124) extending between the top end (120) and the bottom end (122);
a first actuator assembly (134) connecting the base end (132) of the first tool arm (116a) to the side surface (124) of the cylindrical drum (118);
a second actuator assembly (138) connecting the base end (132) of the second tool arm (116b) to the side surface (124) of the cylindrical drum (118), wherein the base end (132) of the second tool arm (116b) is circumferentially spaced from the base end (132) of the first tool arm (116a) on the cylindrical drum (118); and
a third actuator assembly (142) rotationally connecting the base (162) to the top end (120) of the cylindrical drum (118), and wherein the central processing unit is in electrical communication with the first actuator assembly (134), the second actuator assembly (138), and the third actuator assembly (142).

12. The ultrasonic impact grinding assembly (10) of claim 10, further comprising:
a gantry (14) comprising a crossbeam (36) extending from a first support beam (32) to a second support beam (34);
a first actuator assembly (46) connecting the base end (44) of the first tool arm (16a) to the crossbeam (36) of the gantry (14); and
a second actuator assembly (50) connecting the base end (44) of the second tool arm (16b) to the crossbeam (36) of the gantry (14), and wherein the central processing unit is in electrical communication with the first actuator assembly (46) and the second actuator assembly (50).

13. The ultrasonic impact grinding assembly (10) of claim 12, further comprising:
a fixed frame (12) comprising:
a first rail (20);
a second rail (22) spaced from the first rail (20), wherein the first support beam (32) of the gantry (14) is slidably connected to the first rail (20), and wherein the second support beam (34) of the gantry (14) is slidably connected to the second rail (22); and
a pedestal (24) between the first rail (20) and the second rail; and
a third actuator assembly rotationally connecting the base (28) to the pedestal (24), and wherein the central processing unit is in electrical communication with the third actuator assembly.

14. The ultrasonic impact grinding assembly of any of claims 9 to 13, further comprising:
a first supply tube (66) on the first tool arm (16a; 116a; 214) for delivery of a particulate slurry (72);
a first nozzle (64) proximate to the first ultrasonic impact grinding tool head (42a; 154; 230) and connected to the first supply tube (66);
a second supply tube (66) on the second tool arm (16b; 116b; 214); and
a second nozzle (64) proximate to the second ultrasonic impact grinding tool head (42b; 154; 230) and connected to the second supply tube (66).

15. The ultrasonic impact grinding assembly (10; 110) of any of claims 9 to 14, wherein the ultrasonic impact grinding assembly comprises more than two ultrasonic impact grinding tool heads (42a, 42b, 42c; 154).
